# EUROPEAN PATENT APPLICATION

(11) **EP 4 848 608 A1**
(43) Date of publication of application: **02.12.2026**
(21) Application number: 25745271.4
(22) Date of filing: 16.01.2025
(51) Int. Cl.: H04B 7/06, H04B 7/185, H04W 84/06, H04W 76/28, H04W 72/044, H04W 72/232, H04W 76/18, H04L 1/08, H04L 5/16

(54) **TRANSMISSION AND RECEPTION METHOD BASED ON NON-TERRESTRIAL NETWORK AND DEVICE THEREOF**

(30) Priority: 23.01.2024 KR 20240010222; 29.01.2024 KR 20240013307; 02.02.2024 KR 20240016738
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR); PARK, Hanjun, Seoul 06772 (KR)
(74) Representative: Plasseraud IP
(86) International application number: PCT/KR2025/099037
(87) International publication number: WO 2025/159606

(57) **Abstract**

Provided are a method by which a device performs wireless communication and a device for supporting same. The device can obtain information related to at least one random access resource, transmit a first random access channel to a base station on the basis of a first random access resource configured for a first satellite beam from among the at least one random access resource, and receive a response to the first random access channel from the base station. For example, the random access resource may be configured for each satellite beam.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free internet of things (IoT) devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. For example, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method may be provided. For example, the method may comprise: obtaining information related to at least one random access resource; transmitting, to a base station, a first random access channel based on a first random access resource configured for a first satellite beam among the at least one random access resource; and receiving, from the base station, a response to the first random access channel. For example, a random access resource may be configured for each satellite beam.

Based on an embodiment of the present disclosure, a device may be provided. For example, the device may comprise: at least one transceiver; at least one processor; and at least one memory connected to the at least one processor and storing instructions. For example, the instructions, based on being executed by the at least one processor, may cause the device to perform operations comprising: obtaining information related to at least one random access resource; transmitting, to a base station, a first random access channel based on a first random access resource configured for a first satellite beam among the at least one random access resource; and receiving, from the base station, a response to the first random access channel. For example, a random access resource may be configured for each satellite beam.

Based on an embodiment of the present disclosure, a processing device adapted to control a device may be provided. For example, the processing device may comprise: at least one processor; and at least one memory connected to the at least one processor and storing instructions. For example, the instructions, based on being executed by the at least one processor, may cause the device to perform operations comprising: obtaining information related to at least one random access resource; transmitting, to a base station, a first random access channel based on a first random access resource configured for a first satellite beam among the at least one random access resource; and receiving, from the base station, a response to the first random access channel. For example, a random access resource may be configured for each satellite beam.

Based on an embodiment of the present disclosure, a non-transitory computer-readable storage medium storing instructions may be provided. For example, the instructions, when executed, may cause a device to perform operations comprising: obtaining information related to at least one random access resource; transmitting, to a base station, a first random access channel based on a first random access resource configured for a first satellite beam among the at least one random access resource; and receiving, from the base station, a response to the first random access channel. For example, a random access resource may be configured for each satellite beam.

### BRIEF DESCRIPTION OF THE DRAWINGS

FIG. 1 shows a communication procedure between devices based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication structure provideable in a 6G system, based on an embodiment of the present disclosure.
FIG. 7 shows an example of a communication scenario based on a 6G system, based on an embodiment of the present disclosure.
FIGs. 8a and 8b show non-terrestrial network scenarios, based on an embodiment of the present disclosure.
FIG. 9 shows a procedure for performing downlink transmission and reception, based on an embodiment of the present disclosure.
FIG. 10 shows a procedure for performing uplink transmission and reception, based on an embodiment of the present disclosure.
FIG. 11 shows a method for a device to perform wireless communication, based on an embodiment of the present disclosure.
FIG. 12 shows a method for a base station to perform wireless communication, based on an embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, the term "configured or defined" may be interpreted as being pre-configured or configured to a device through pre-defined signaling (e.g., SIB, MAC, RRC, downlink control information (DCI), etc.) from a base station or a network. In the present disclosure, the term "configured or defined" may be interpreted as being pre-configured or configured to a device through pre-defined signaling (e.g., MAC, RRC, sidelink control information (SCI), control information signaled between devices, etc.) from another device. In the present disclosure, the term "configured or defined" may be interpreted as being pre-configured to a device.

In the present disclosure, a user equipment (UE) may refer to a device, a portable device, a wireless device, etc. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, etc.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

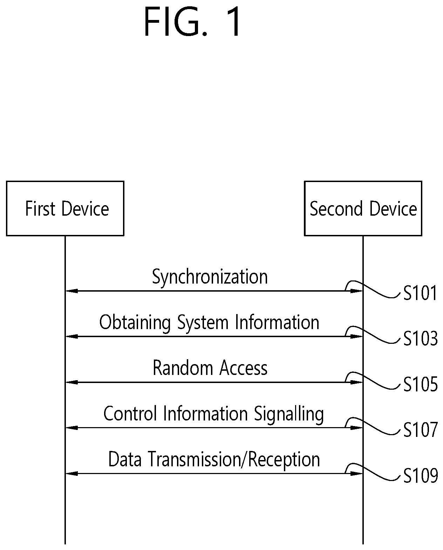

FIG. 1 shows a communication procedure between devices based on an embodiment of the present disclosure. The embodiment of FIG. 1 may be combined with various embodiments of the present disclosure.

Referring to FIG. 1, in step S101, a first device and a second device may perform synchronization. For example, the first device may be at least one of a UE and/or a device proposed in the present disclosure. For example, the second device may be at least one of a base station, a network, a RAN node, an NTN node/cell, a TRP, a UE, and/or a device proposed in the present disclosure. For example, the first device may perform an initial cell search operation. For example, the first device may detect at least one synchronization signal transmitted based on a rule pre-defined by the second device. Herein, for example, the synchronization signal may include a plurality of synchronization signals (e.g., a primary synchronization signal, a secondary synchronization signal, etc.) classified based on a structure or a purpose. By this, the first device may check a boundary of a frame, a subframe, a time unit, a slot and/or a symbol of the second device, and the first device may obtain information (e.g., a cell identifier) for the second device.

In step S103, the first device may obtain system information transmitted by the second device. For example, the system information may include information related to attributes, characteristics, and/or capabilities of the second device required to access the second device and use a service. For example, the system information may be classified based on content (e.g., whether it is essentially required for access), a transmission structure (e.g., a used channel, whether it is provided based on on-demand), etc. For example, the system information may be classified into a master information block (MIB) and a system information block (SIB). For example, as needed, the first device may transmit a signal requesting the system information prior to receiving the system information. For example, a request and provision of the system information may be performed after a random access procedure to be described later.

In step S105, the first device and the second device may perform a random access procedure. For example, the first device may transmit and/or receive at least one message (e.g., a random access preamble, a random access response message, etc.) for the random access procedure, based on information related to a random access channel of the second device (e.g., a channel position, a channel structure, a structure of a supported preamble, etc.) obtained through the system information. For example, the first device may transmit a preamble (e.g., Msg1) through a random access channel, and the first device may receive a random access response message (e.g., Msg2), and the first device may transmit a message (e.g., Msg3) including information related to the first device (e.g., identification information) to the second device by using scheduling information included in the random access response message, and the first device may receive a message (e.g., Msg4) for contention resolution and/or connection establishment. For example, Msg1 and Msg3 may be transmitted and received as one message (e.g., MsgA), and/or Msg2 and Msg4 may be transmitted and received as one message (e.g., MsgB).

In step S107, the first device and the second device may perform signaling of control information. Herein, for example, the control information may be defined in various layers such as a layer controlling a connection (e.g., a radio resource control (RRC) layer), a layer processing mapping between a logical channel and a transport channel (e.g., a media access control (MAC) layer), a layer processing a physical channel (e.g., a physical (PHY) layer), etc. For example, the first device and the second device may perform at least one of signaling for establishing a connection, signaling for determining a configuration related to communication, and/or signaling for indicating allocated resources. For example, the control information may be signaled/transmitted through a control channel. For example, the control information and/or the control channel may be used in scheduling at least one of data, a data channel (e.g., a shared channel), and/or control information on the data channel.

In step S109, the first device and the second device may transmit and/or receive data. For example, the first device and the second device may process data based on the signaling of the control information, and transmit and/or receive the data. For example, in a case of transmitting data, the first device or the second device may perform at least one of channel encoding, rate matching, scrambling, constellation mapping, layer mapping, waveform modulation, antenna mapping, and/or resource mapping for information bits. For example, in a case of receiving data, the first device or the second device may perform at least one of signal extraction from a resource, waveform demodulation for each antenna, signal arrangement considering layer mapping, constellation demapping, descrambling, and/or channel decoding.

For example, layers of a radio interface protocol between the first device and the second device may be classified into a first layer (layer 1, L1), a second layer (layer 2, L2), a third layer (layer 3, L3), etc. For example, a physical layer belonging to the first layer may provide an information transfer service using a physical channel, and a radio resource control (RRC) layer located in the third layer may perform a role of controlling radio resources between the first device and the second device. To this end, for example, the RRC layer may exchange an RRC message between the first device and the second device.

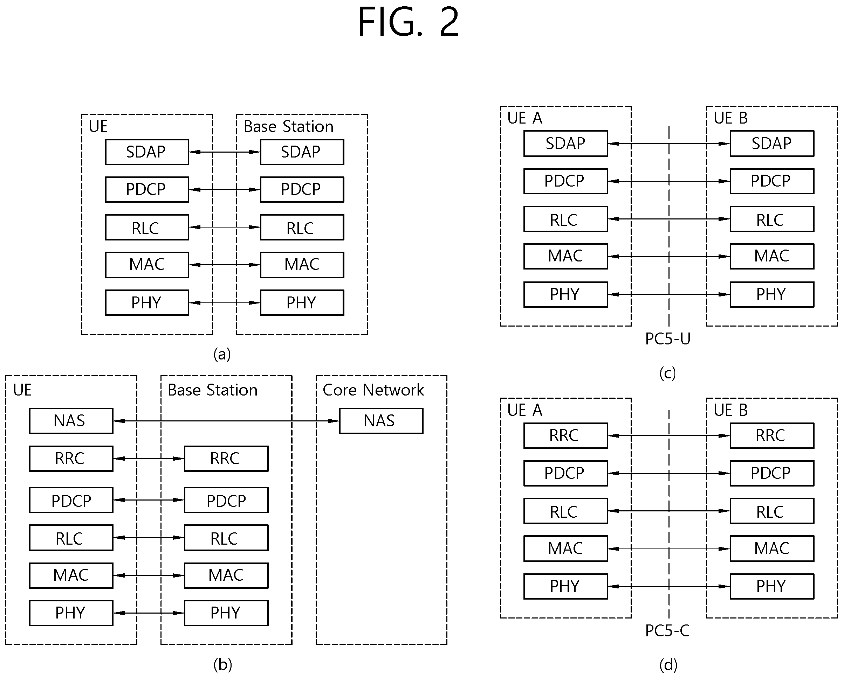

FIG. 2 shows a radio protocol architecture, based on an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, the physical layer may provide an information transfer service to a higher layer using a physical channel. For example, the physical layer may be connected with a medium access control (MAC) layer, which is a higher layer, through a transport channel. For example, data may be transferred between the MAC layer and the physical layer through the transport channel. For example, the transport channel may be classified based on how and with what characteristics data is transmitted through a radio interface. For example, data may be transmitted through a physical channel between different physical layers, i.e., between physical layers of the first device and the second device. For example, the physical channel may be modulated in an orthogonal frequency division multiplexing (OFDM) scheme, and time and frequency may be utilized as radio resources.

For example, the MAC layer may provide a service to a radio link control (RLC) layer, which is a higher layer, through a logical channel. For example, the MAC layer may provide a mapping function from a plurality of logical channels to a plurality of transport channels. For example, the MAC layer may provide a logical channel multiplexing function by mapping from a plurality of logical channels to a single transport channel. For example, a MAC sub-layer may provide a data transmission service on a logical channel.

For example, the RLC layer may perform concatenation, segmentation, and reassembly of an RLC service data unit (SDU). For example, in order to guarantee various quality of service (QoS) required by a radio bearer (RB), the RLC layer may provide three operation modes of transparent mode (TM), unacknowledged mode (UM), and acknowledged mode (AM). For example, an AM RLC may provide error correction through an automatic repeat request (ARQ).

For example, the radio resource control (RRC) layer may be defined only in the control plane. For example, the RRC layer may serve to control the logical channel, the transport channel, and the physical channel in relation to configuration, reconfiguration, and release of radio bearers. For example, the RB may refer to a logical path provided by the first layer (e.g., the physical layer) and the second layer (e.g., the MAC layer, the RLC layer, a packet data convergence protocol (PDCP) layer, a service data adaptation protocol (SDAP) layer, etc.) for data delivery between the first device and the second device.

For example, a function of the PDCP layer in the user plane may include delivery of user data, header compression, and ciphering. For example, a function of the PDCP layer in the control plane may include delivery of control plane data and ciphering/integrity protection.

For example, the configuration of the RB may imply a process for specifying a radio protocol layer and channel properties to provide a particular service and for configuring each specific parameter and operation method. For example, the RB may be divided into two types: a signaling radio bearer (SRB) and a data radio bearer (DRB). For example, the SRB may be used as a path for transmitting an RRC message in the control plane, and the DRB may be used as a path for transmitting user data in the user plane.

For example, a downlink transport channel may include at least one of a broadcast channel (BCH) transmitting system information, and/or a downlink shared channel (SCH) transmitting user traffic or a control message other than that. For example, in a case of traffic or a control message of a downlink multicast or broadcast service, it may be transmitted through the downlink SCH, or it may be transmitted through a separate downlink multicast channel (MCH). Meanwhile, an uplink transport channel may include at least one of a random access channel (RACH) transmitting an initial control message, and/or an uplink shared channel (SCH) transmitting user traffic or a control message other than that. For example, the logical channel, which is located above the transport channel and mapped to the transport channel, may include at least one of a broadcast control channel (BCCH), a paging control channel (PCCH), a common control channel (CCCH), a multicast control channel (MCCH), and/or a multicast traffic channel (MTCH).

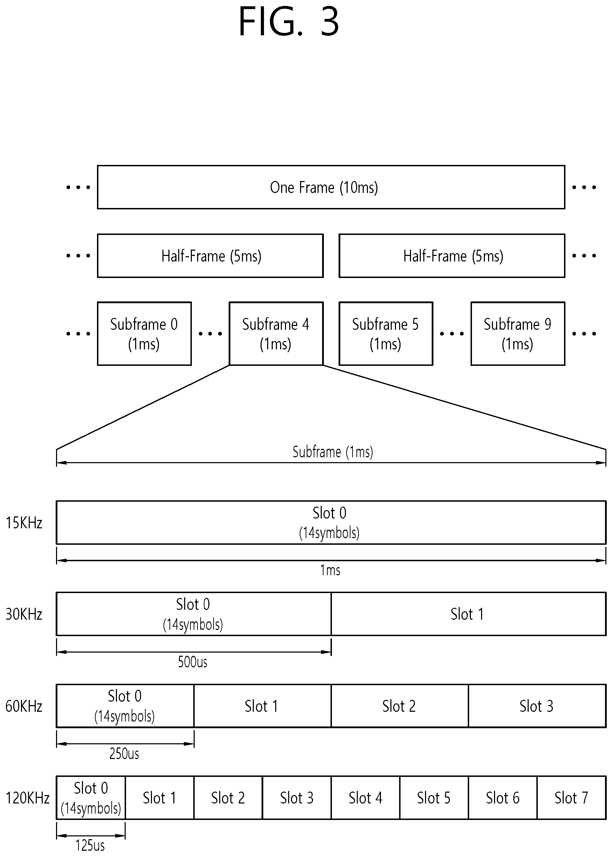

FIG. 3 shows a structure of a radio frame, based on an embodiment of the present disclosure. The embodiment of FIG. 3 may be combined with various embodiments of the present disclosure.

Referring to FIG. 3, for example, a radio frame may be used in uplink transmission, downlink transmission, and/or inter-device transmission. For example, the radio frame may have a length of 10ms, and may be defined as two 5ms half-frames (HF). For example, the half-frame may include five 1ms subframes (SF). For example, the subframe may be divided into one or more slots, and the number of slots within the subframe may be determined based on a subcarrier spacing (SCS). For example, each slot may include 12 or 14 OFDM(A) symbols based on a cyclic prefix (CP).

For example, in a case where a normal CP is used, each slot may include 14 symbols. For example, in a case where an extended CP is used, each slot may include 12 symbols. Herein, for example, the symbol may include an OFDM symbol (or, a CP-OFDM symbol), and/or a single carrier-FDMA (SC-FDMA) symbol (or, a Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, between a plurality of cells aggregated to one UE, OFDM(A) numerologies (e.g., SCS, CP length, etc.) may be configured differently. Accordingly, an (absolute time) duration of a time resource (e.g., subframe, slot, or transmit time interval (TTI)) configured with the same number of symbols may be configured differently between the aggregated cells. For example, in the present disclosure, a time resource such as a subframe, a slot, a TTI, etc. may be referred to as a time unit.

For example, a plurality of numerologies or SCSs may be supported to support various services. For example, in a case where the SCS is 15kHz, a wide area in conventional cellular bands may be supported, and in a case where the SCS is 30kHz/60kHz, a dense-urban, a lower latency, and a wider carrier bandwidth may be supported. For example, in a case where the SCS is 60kHz or higher than that, a bandwidth greater than 24.25GHz may be supported to overcome phase noise.

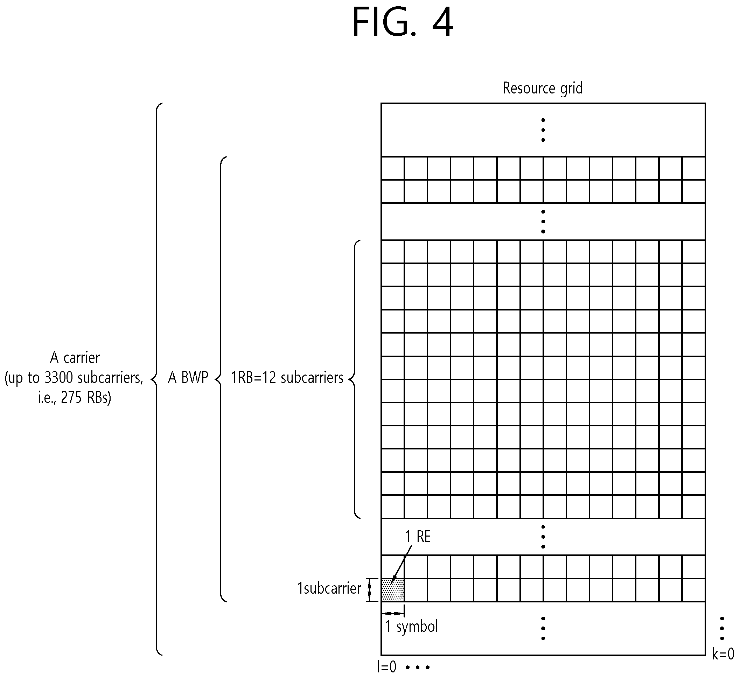

FIG. 4 shows a slot structure of a frame, based on an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in the frequency domain. For example, a bandwidth part (BWP) may be defined as a plurality of consecutive (physical) resource blocks ((P)RB) in the frequency domain, and may correspond to one numerology (e.g., SCS, CP length, etc.). For example, a carrier may include a maximum of N BWPs (where N is a positive integer). For example, data communication may be performed through an activated BWP. For example, each element may be referred to as a resource element (RE) in a resource grid, and one complex symbol may be mapped to each element.

For example, a BWP may be a set of consecutive PRBs in a given numerology. For example, a PRB may be selected from a subset of consecutive common resource blocks (CRB) for a given numerology on a given carrier.

For example, a BWP may be at least one of an active BWP, an initial BWP, and/or a default BWP. For example, a UE may not monitor a downlink radio link quality in a DL BWP other than an active DL BWP on a primary cell (PCell). For example, the UE may not receive a physical downlink control channel (PDCCH), a physical downlink shared channel (PDSCH), or a channel state information-reference signal (CSI-RS) (excluding radio resource management (RRM)) outside the active DL BWP. For example, the UE may not trigger a channel state information (CSI) report for an inactive DL BWP. For example, the UE may not transmit a physical uplink control channel (PUCCH) or a physical uplink shared channel (PUSCH) outside an active UL BWP. For example, in a case of downlink, an initial BWP may be given as a set of consecutive resource blocks (RB) for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of the default BWP may be an initial DL BWP. For energy saving, if the UE does not detect downlink control information (DCI) for a certain period of time, the UE may switch the active BWP of the UE to the default BWP.

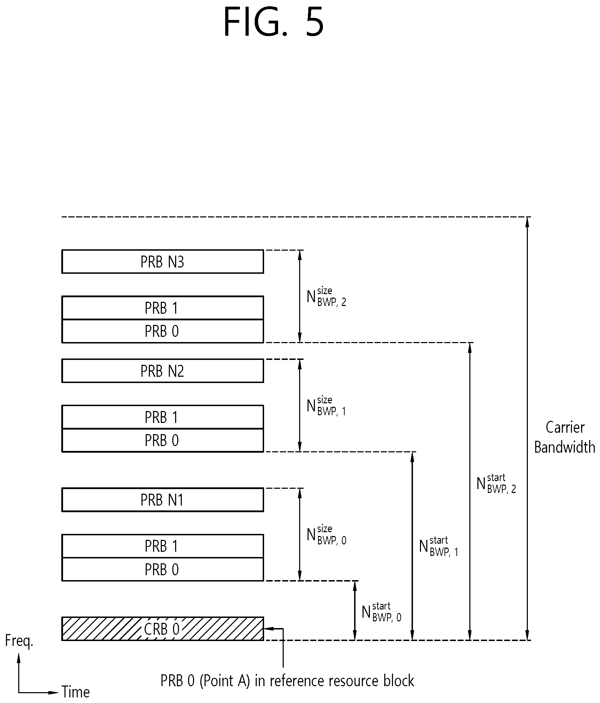

FIG. 5 shows an example of a BWP, based on an embodiment of the present disclosure. The embodiment of FIG. 5 may be combined with various embodiments of the present disclosure. In the embodiment of FIG. 5, it is assumed that there are three BWPs.

Referring to FIG. 5, for example, a common resource block (CRB) may be a carrier resource block numbered from one end of a carrier band to the other end thereof, and a PRB may be a resource block numbered within each BWP. For example, Point A may indicate a common reference point for a resource block grid.

For example, a BWP may be configured by Point A, an offset N^{start}_{BWP} from Point A, and a bandwidth N^{size}_{BWP}. For example, Point A may be an external reference point of a PRB of a carrier where subcarrier 0 of all numerologies (e.g., all numerologies supported by a network on the corresponding carrier) is aligned. For example, the offset may be a PRB interval between a lowest subcarrier and Point A in a given numerology. For example, the bandwidth may be the number of PRBs in the given numerology.

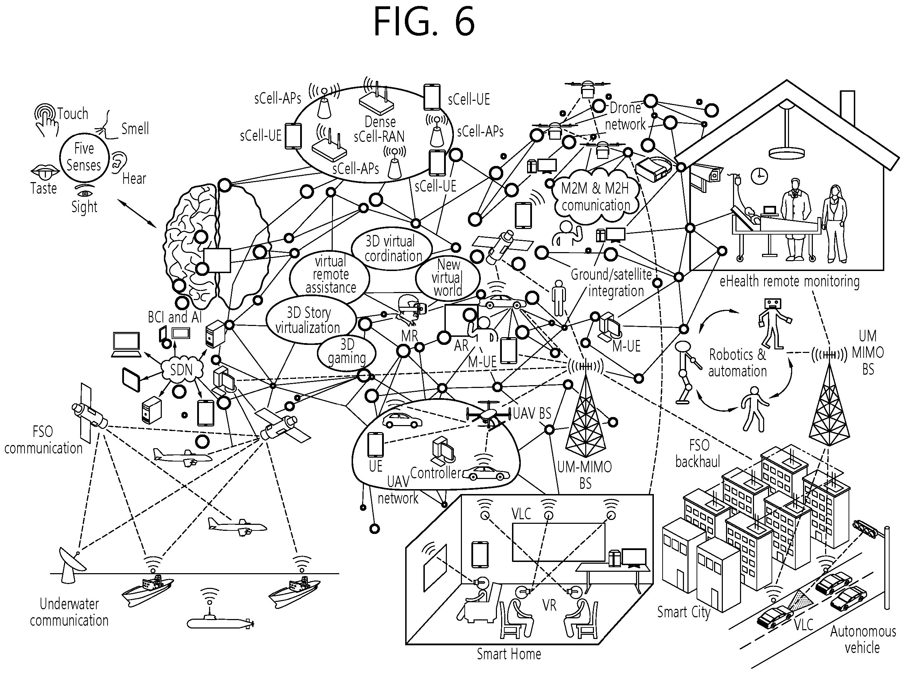

FIG. 6 shows a communication structure provideable in a 6G system, based on an embodiment of the present disclosure. The embodiment of FIG. 6 may be combined with various embodiments of the present disclosure.

As core implementation technologies of the 6G system, technologies such as artificial intelligence (AI), Terahertz (THz) communication, optical wireless technology, free space optical (FSO) backhaul network, massive multiple input multiple output (MIMO) technology, blockchain, 3D networking, quantum communication, unmanned aerial vehicle, cell-free communication, wireless information and energy transfer (WIET), integrated sensing and communication, integrated access and backhaul network, holographic beamforming, big data analytics, large intelligent surface (LIS), etc. may be adopted.
- Artificial Intelligence (AI): When AI is introduced to communication, real-time data transmission may be simplified and improved. AI may determine a method of performing complicated target tasks using countless analysis. For example, AI may increase efficiency and reduce processing delay. Operations consuming time such as handover, network selection, and resource scheduling may be immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-THz communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), etc.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on.
- Non-terrestrial network (NTN): NTN may represent a network or a network segment using radio frequency (RF) resources mounted on a satellite (or a UAS platform). Use of an NTN service may be considered to secure wider coverage or to provide a wireless communication service to a place where installation of a wireless communication base station is not easy.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc.
- Reconfigurable intelligent surface (RIS): RIS may be used to manipulate and enhance signal propagation in a wireless communication environment. For example, RIS may be composed of meta-surfaces or many small antennas arranged on a surface, and each small antenna may actively adjust a phase, an amplitude, a polarization, etc. of a reflected signal. For example, RIS can improve signal reception by adjusting a path, a phase, and/or an intensity of a propagated signal. For example, in a case of RIS, because power is consumed only for phase and amplitude adjustment of small antennas, power consumption may be very low. For example, because RIS may be reconfigured in accordance with various environments, it can satisfy various communication requirements and can effectively operate in a dynamic network environment.

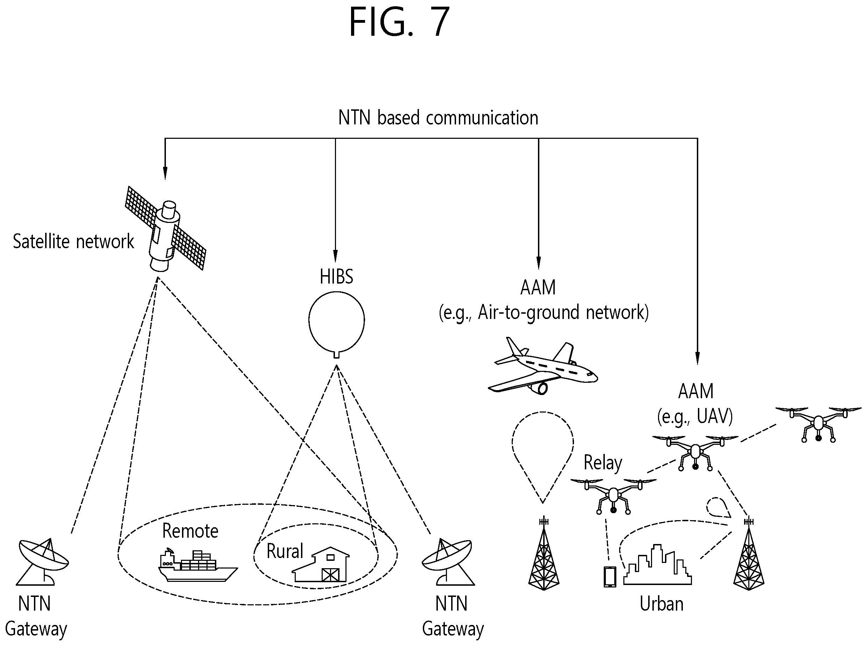

FIG. 7 shows an example of a communication scenario based on a 6G system, based on an embodiment of the present disclosure. The embodiment of FIG. 7 may be combined with various embodiments of the present disclosure.

Referring to FIG. 7, NTN communication may be performed based on a satellite network, high-altitude platform stations (HAPS) as international mobile telecommunications (IMT) base stations (BS) (HIBS), a UE (e.g., AAM) capable of aerial communication, etc. For example, for coverage enhancement, etc., a device such as the satellite network, the HIBS, the UE (e.g., AAM) capable of aerial communication, etc. may perform a role of a relay. For example, the AAM may perform communication with a base station, a satellite network, etc., and/or the AAM may perform direct communication with a UE, another AAM, etc.

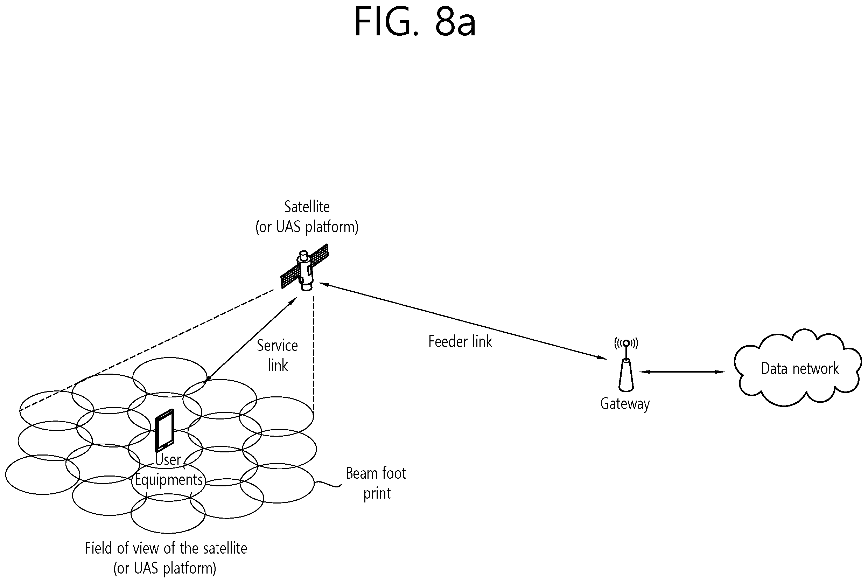

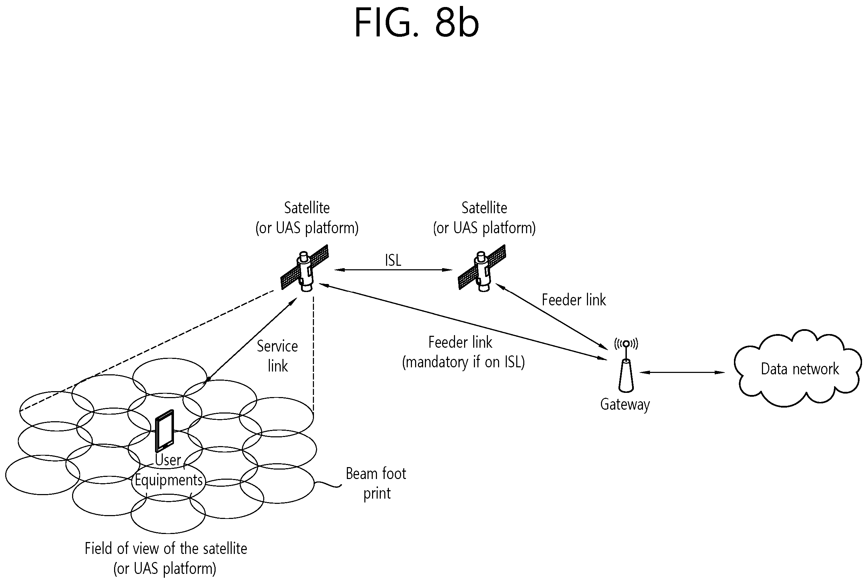

FIGs. 8a and 8b show non-terrestrial network scenarios, based on an embodiment of the present disclosure. The embodiments of FIGs. 8a and 8b may be combined with various embodiments of the present disclosure.

FIG. 8a shows a non-terrestrial network scenario based on a transparent payload, and FIG. 8b shows a non-terrestrial network scenario based on a regenerative payload. For example, a non-terrestrial network may generally include the following element(s).
- One or more satellite gateways connecting the non-terrestrial network to a public data network
- A feeder link or a wireless link between a satellite gateway and a satellite (or UAS platform)
- A service link or a wireless link between a user equipment (UE) and a satellite (or UAS platform)
- A satellite (or UAS platform) that can implement a transparent or regenerative payload (including onboard processing). For example, the satellite (or UAS platform) may generally generate multiple beams across a given service area bounded by line of sight. For example, a beam footprint may generally be elliptical. For example, the line of sight of the satellite (or UAS platform) may vary based on an onboard antenna diagram and a minimum elevation angle. For example, for the transparent payload, radio frequency filtering, frequency conversion, and amplification may be performed. Therefore, a repeated waveform signal in the payload may not be changed. For example, for the regenerative payload, radio frequency filtering, frequency conversion and amplification, and demodulation/decoding, switching and/or routing, and coding/modulation may be performed. This may effectively be the same as mounting all base station functions on the satellite (or UAS platform).
- Optionally, an inter-satellite link (ISL);
- A user equipment may be served by a satellite (or UAS platform) within a target service area.

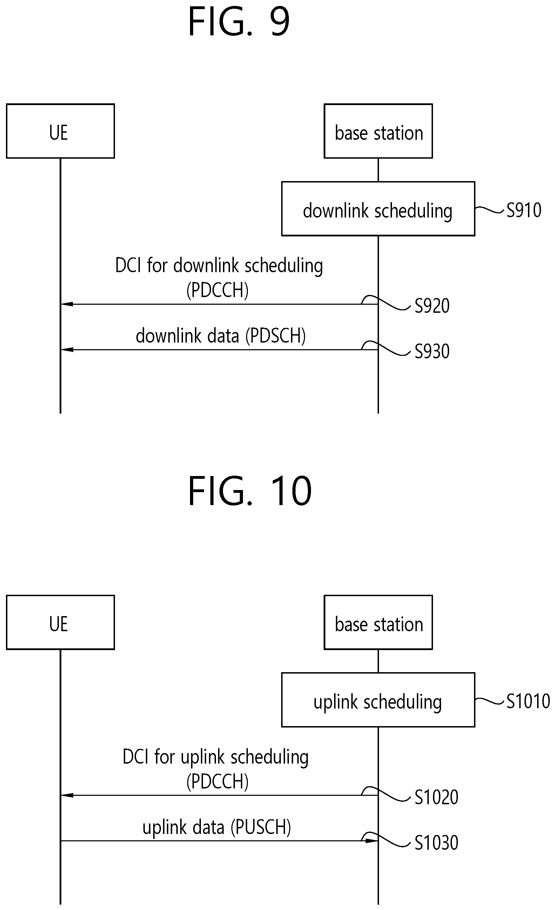

FIG. 9 shows a procedure for performing downlink transmission and reception, based on an embodiment of the present disclosure. The embodiment of FIG. 9 may be combined with various embodiments of the present disclosure.

Referring to FIG. 9, in step S910, a base station may schedule a downlink transmission such as a frequency/time resource, a transmission layer, a downlink precoder, a modulation and coding scheme (MCS), etc. For example, the base station may determine a beam for a PDSCH transmission to a UE.

In step S920, the UE may receive, from the base station, a DCI for downlink scheduling (e.g., including scheduling information of the PDSCH) on a PDCCH.

For example, a DCI format 1_0 or 1_1 may be used for downlink scheduling. For example, the DCI format 1_1 may include information as follows: identifier for DCI formats, bandwidth part indicator, frequency domain resource assignment, time domain resource assignment, bundling size indicator, rate matching indicator, zero power (ZP) CSI-RS trigger, antenna port(s), transmission configuration indication (TCI), sounding reference signal (SRS) request, demodulation reference signal (DMRS) sequence initialization.

For example, according to each state indicated in an antenna port(s) field, the number of DMRS ports may be scheduled, and also single-user (SU)/multi-user (MU) transmission scheduling may be possible.

For example, a TCI field may be configured with 3 bits, and quasi co-location (QCL) for DMRS may be dynamically indicated by indicating up to 8 TCI states according to a TCI field value.

In step S930, the UE may receive downlink data from the base station on the PDSCH.

For example, if the UE detects the PDCCH including the DCI format 1_0 or 1_1, the UE may decode the PDSCH based on an indication by the corresponding DCI.

FIG. 10 shows a procedure for performing uplink transmission and reception, based on an embodiment of the present disclosure. The embodiment of FIG. 10 may be combined with various embodiments of the present disclosure.

Referring to FIG. 10, in step S1010, a base station may schedule an uplink transmission such as a frequency/time resource, a transmission layer, an uplink precoder, a modulation and coding scheme (MCS), etc. For example, the base station may determine a beam for a PUSCH transmission of a UE.

In step S1020, the UE may receive, from the base station, a DCI for uplink scheduling (e.g., including scheduling information of the PUSCH) on a PDCCH.

For example, a DCI format 0_0 or 0_1 may be used for uplink scheduling. For example, the DCI format 0_1 may include information as follows: identifier for DCI formats, UL/supplementary uplink (SUL) indicator, bandwidth part indicator, frequency domain resource assignment, time domain resource assignment, frequency hopping flag, modulation and coding scheme (MCS), SRS resource indicator (SRI), precoding information and number of layers, antenna port(s), SRS request, DMRS sequence initialization, uplink shared channel (UL-SCH) indicator.

For example, SRS resources configured within an SRS resource set associated with a higher layer parameter 'usage' may be indicated by an SRS resource indicator field. For example, 'spatialRelationInfo' may be configured for each SRS resource, and a value thereof may be one of {CRI, SSB, SRI}.

In step S1030, the UE may transmit uplink data to the base station on the PUSCH.

For example, if the UE detects the PDCCH including the DCI format 0_0 or 0_1, the UE may transmit the corresponding PUSCH according to an indication by the corresponding DCI. For example, two transmission schemes of a codebook-based transmission and a non-codebook-based transmission may be supported for the PUSCH transmission.

For example, if a higher layer parameter 'txConfig' is set to 'codebook', the UE may be configured with the codebook-based transmission. On the other hand, for example, if the higher layer parameter 'txConfig' is set to 'nonCodebook', the UE may be configured with the non-codebook-based transmission. For example, if the higher layer parameter 'txConfig' is not configured, the UE may not expect to be scheduled by the DCI format 0_1. For example, if the PUSCH is scheduled by the DCI format 0_0, the PUSCH transmission may be based on a single antenna port.

Meanwhile, in the next NTN system, effective isotropic radiated power (EIRP) and/or bandwidth (BW) for DL transmission may be limited, and in the above situation, coverage enhancement for DL channel transmission may be required. For example, due to a limit of hardware and/or a limit of EIRP of a satellite, the number of satellite beams that can be simultaneously activated may be limited, and traffic characteristics expected for each beam footprint may be different. For example, PDCCH coverage may be changed according to a PDCCH coverage enhancement method, and accordingly, a radio link failure (RLF) criterion may need to be changed.

Meanwhile, UEs supporting a DL coverage enhancement operation and UEs not supporting the DL coverage enhancement operation may coexist within an NTN footprint, a cell, or a beam. Therefore, it may be necessary to minimize the impact that the DL coverage enhancement operation has on legacy UEs.

Meanwhile, in the NTN system, EIRP for an activated (beam) footprint may be increased by a method of limiting the number or a ratio of (beam) footprints that a single satellite or a high altitude platform station (HAPS) can simultaneously activate, or a general value may be used. Meanwhile, a method of activating and/or deactivating the (beam) footprint over time may appear in the form of a time interval in which all or a part of a DL reception operation (e.g., PDCCH monitoring and/or reference signal reception and/or radio link monitoring (RLM)/CSI/RRM measurement and/or synchronization signal block (SSB) reception, etc.) is required/allowed and/or a time interval in which it is not allowed at a UE side.

Meanwhile, a base station may provide cell discontinuous transmission (DTX) and/or discontinuous reception (DRX) configuration information to a UE, and the cell DTX configuration information may include cell DTX ON duration information (start offset and/or interval length). For the UE provided with the cell DTX configuration information, if the cell DTX configuration information is activated (through RRC and/or group-common DCI), for a time period while celldtxdrx-onDurationTimer is running and/or a time period while drx-RetransmissionTimerDL or drx-RetransmissionTimerUL or drx-RetransmissionTimerSL is running and/or a time period in which SR on PUCCH is pending and/or a time period in which a PDCCH indicating a new transmission for a cell radio network temporary identifier (C-RNTI) has not yet been detected after successfully receiving a random access response (RAR) for a physical random access channel (PRACH) not selected by a MAC entity and/or a time period while ra-ResponseWindow is running in a special cell (SPCell), the UE may perform PDCCH monitoring in a serving cell corresponding to the cell DTX configuration. A union of the time periods may be referred to as a cell DTX active period. Meanwhile, a UE operation by a retransmission timer of the connected mode discontinuous reception (C-DRX) may be extended to PDCCH monitoring for serving cells belonging to a DRX group. Meanwhile, for the UE provided with the cell DTX configuration information, if the cell DTX configuration information is activated (through RRC and/or group-common DCI), in a time domain other than the cell DTX active period for the various factors, the UE may skip PDCCH monitoring in the corresponding serving cell and/or may not indicate a DL-SCH reception operation according to a semi-persistent scheduling (SPS) PDSCH in a physical layer, and/or may not indicate the existence of a configured DL assignment, and/or may not transfer stored HARQ information for it, and/or may not set a HARQ process ID to a HARQ process ID associated with a PDSCH duration of the configured DL assignment, and/or may not consider that a new data indicator (NDI) has been toggled for a HARQ process ID associated with a PDSCH duration of the configured DL assignment.

Whether and how to apply various embodiments of the present disclosure may be applied differently for each fallback DCI format and non-fallback DCI format and/or for each DCI format.

Whether and how to apply various embodiments of the present disclosure may be applied differently for each common search space (CSS) (all or a part of CSS (Type-0 and/or Type-0A and/or Type-1 and/or Type-2 and/or Type-3)) and UE-specific search space (USS) and/or for each control resource set #0 (CORESET#0) and non-zero CORESET and/or for each search space and/or for each CORESET.

Whether and how to apply various embodiments of the present disclosure may be applied differently for each RNTI for a PDCCH and/or for each purpose for a PDCCH (whether it is for SIB1 scheduling and/or whether it is for direct message transmission).

A combination of various embodiments of the present disclosure may be applied differently based on a payload type (e.g., regenerative or transparent payload) of a satellite.

A combination of various embodiments of the present disclosure may be applied differently for each type of a non-terrestrial network node (e.g., geostationary earth orbit (GEO), non-geostationary earth orbit (NGEO), low earth orbit (LEO), medium earth orbit (MEO), high altitude platform system (HAPS), drone), for each altitude, for each fixed beam footprint, or for each cell-moving beam footprint, etc.

For example, a satellite and/or a HAPS for a non-terrestrial network may provide, to a terrestrial base station and/or a gateway (GW), information on a ratio and/or the number of (beam) footprints that can be (simultaneously) activated (while maintaining normal EIRP) and/or information on (beam) footprints to be allocated for the GW or the base station and/or total transmit power or energy or a sum of EIRP of footprints to be allocated to the GW or the base station or all of the satellite or the HAPS and/or the number of footprints and/or the total number and/or a list of GWs or base stations supported by the satellite and/or the HAPS and/or cell DTX and/or DRX configuration(s) and/or power allocation profile configuration(s) configured for each base station or cell or footprint and/or information on cell(s) and/or configuration information supported by each base station and/or association/relationship information between a base station or a cell and a footprint. For example, the base station may again transfer all or a part of the information or information that can be derived through it to the UE (through the satellite and/or the HAPS).

For example, cell DTX and/or DRX configuration information may be configured for each footprint and/or for each beam group (e.g., TCI group, SSB index group, CSI-RS resource (set) index group), and/or may be extended to operate in the unit. In the embodiment of the present disclosure, the extended cell DTX and/or DRX configuration information is referred to as DL power allocation profile configuration information. For example, all or a part of a DL signal or each reference value may be configured differently and/or independently for each DL power allocation profile.

For example, the base station may indicate/configure a periodic and/or aperiodic time period (as an active period) to the UE through the DL power allocation profile configuration, and/or a first reference power may be used in the configured time period or the active period, and a second reference power may be used in other time periods.

For example, it may be expected/assumed that a third reference power is generally used in an active period for a first DL power allocation profile configuration, and/or it may be expected/assumed that a fourth reference power different from (e.g., relatively smaller than) the third reference power is used in an active period for a second power allocation profile configuration, or it may be expected that a specific offset value (e.g., a value configured by RRC) is applied (e.g., added and/or subtracted) from the third reference power. For example, the UE may expect/assume to use a reference power associated with a specific power allocation profile configuration in a period where active periods according to different power allocation profile configurations overlap.

Meanwhile, transmit power of a DL RS (which may include an SSB) may be variable in a time domain. This may be a situation of limiting (including non-transmission) transmit power for some footprints for a purpose of activating/maintaining extensive (beam) footprints in a situation where power available by a single satellite at the same time is limited in a non-terrestrial network environment and/or a situation of concentrating transmit power (increasing transmit power) for another part of footprints.

Meanwhile, in the above situation, when deriving CSI-RS energy per resource element (EPRE) based on the transmit power of the SSB in a situation where the transmit power of the SSB is variable, accuracy of a CSI-RS-based (CSI and/or RRM) measurement value may decrease as an incorrect value is assumed for the transmit power for the CSI-RS.

For example, time resources of all or a part of SIBs (e.g., SIB1) and/or an SSB transmitted for each cell and/or for each footprint and/or for each beam group may be mutually TDMed, and a serving cell may provide related time difference information to the UE. For example, system frame number 0 (SFN0) or a start or end timing thereof for each cell and/or for each footprint and/or for each beam group may be mutually TDMed, and the serving cell may provide related time difference information to the UE. For example, cells that are targets of the operation may be limited to cells associated with the same GW and/or base station and/or gNB. Herein, for example, the UE may perform measurement for neighbor cell(s) based on SSB time resource information for neighbor cell(s).

For example, the base station may indicate at least information on a reference power for a reference signal to the UE through separate signaling (e.g., RRC and/or MAC CE and/or group-common DCI) at a timing of sending the reference signal and/or before it.

For example, the information on the reference power may be in the form of EPRE or TX power for the reference signal, and/or may be a value for (reference) power of an SSB, and/or may be an offset value based on a configured reference power of an SSB.

For example, through a PBCH, whether a (real) power value of an SSB corresponding to the PBCH is a configured reference power value and/or whether a specific offset value is applied and/or the applied offset value may be indicated to the UE.

For example, reference power information for an aperiodic CSI-RS may be indicated to the UE through a DCI triggering the aperiodic CSI-RS. For example, a reference power value may be respectively configured through RRC for each aperiodic CSI-RS triggering state.

For example, the UE may be provided with a power allocation profile configuration for a serving cell and/or neighbor cells and/or cells supported from the same GW or base station as the serving cell from the serving cell.

For example, if a power value (e.g., a small value) different from a reference power configured for a reference signal and/or derived based on configuration value(s) is used as a real power value and/or if a difference between the real power value and the reference power exceeds a certain level (pre-defined or configured by RRC), transmission of the corresponding reference signal to the UE may be omitted by the base station.

For example, in a case of measurement based on an SSB, only if decoding of a PBCH corresponding to the SSB is successful (if a cyclic redundancy check (CRC) check is passed), the UE may use/consider a measurement result based on the SSB. The above restriction may also be applied when the UE measures a neighbor cell.

For example, candidate values of reference power for the reference signal and/or candidate values of reference power that is a target of a measurement report may be indicated/configured by RRC and/or MAC CE and/or (group-common) DCI. For example, information on the reference power value for the reference signal may be included as a part of a measurement report of the UE.

For example, a reference power for a DL reference signal may be determined based on a power value for a PRACH and/or a Msg3 of the UE and/or whether and how coverage enhancement is applied and/or the number of repetitions and/or resources. For example, the DL reference signal may correspond to an RAR PDCCH and/or PDSCH for the PRACH and/or DMRS therefor and/or a Msg4 PDCCH and/or PDSCH. For example, the DL reference signal may correspond to a Msg4 PDCCH and/or PDSCH for the Msg3. For example, the DL reference signal may include a PDCCH and/or a PDSCH used before RRC configuration for PDSCH EPRE and/or DMRS therefor.

For example, the base station may distinguish PRACH resources by a TDM and/or FDM and/or CDM scheme for each cell and/or for each footprint and/or for each beam group, and/or the base station may determine which cell and/or footprint and/or beam group is busy based on a resource used for PRACH transmission by the UE. In the present disclosure, the cell and/or the footprint and/or the beam group may be referred to as a satellite beam. For example, the base station may distinguish/allocate resources for random access channel transmission for each satellite beam. Herein, for example, the resources for random access channel transmission may be distinguished/allocated for each satellite beam based on the TDM and/or FDM and/or CDM scheme. In this case, for example, the base station may determine a busy satellite beam and/or an idle satellite beam based on a resource used for random access channel transmission by the UE.

For example, an EPRE value and/or a reference power value for CSI-RS transmission and/or an offset value compared to reference power of an SSB may be configured differently and/or independently for each CSI reporting configuration and/or for each CSI measurement configuration and/or for each CSI resource (set) configuration. For example, an EPRE and/or a reference power value of an aperiodic CSI-RS may be indicated in a DCI triggering aperiodic CSI. Configuring it differently for each CSI reporting configuration has an advantage that many RS resources can be secured for a specific single reference power for a single CSI report. Configuring it differently for each CSI resource (set) configuration may have an advantage in generating and reporting CSI for a plurality of reference powers with a single CSI report.

Meanwhile, in a situation where reference power for a CSI-RS may be time-varying and/or TX power for a PDSCH may be time-varying, the UE needs to determine CSI (e.g., rank indicator (RI), channel quality indicator (CQI)) based on various PDSCH reference powers. Meanwhile, power for a neighbor cell or a neighbor footprint may also be time-varying, and accordingly, an interference level in a serving cell/footprint may also change. For this, by providing a cell DTX pattern and/or a cell power reduction period pattern used in a neighbor cell or information corresponding to it to the UE, the UE may be made to measure and report CSI accordingly. Through this, accuracy of CSI reporting can also be increased.

For example, the UE may determine and report a plurality of CQIs, and each CQI may be associated with a different PDSCH reference power.

For example, a plurality of PDSCH reference powers for the CQI report may be indicated in a DCI requesting a CSI report and/or may be configured in a CSI reporting configuration.

For example, CSI measurement and/or CSI reporting and/or measurement reporting may be (separately) configured/indicated and performed for each combination of a configuration related to a resource for channel measurement and a configuration related to a resource for interference. As a basis for this, a combination of EIRP and/or transmit power used in a neighbor cell or footprint may be different for each time interval for interference measurement.

In an embodiment of the present disclosure, the UE may perform measurement based on a received RS for time intervals having the same reference power, and/or may generate a measurement result and/or report it to the base station. Alternatively, the UE may select a PRACH resource based on the measurement result and/or may determine a suitable RX spatial setting and/or may determine whether to declare an RLF.

In an embodiment of the present disclosure, if it is determined that a reference power is changed, the UE may reset L3-filtering for measurement based on a received RS.

For example, when determining an RLF, the UE may determine it based only on a specific reference power (e.g., general high power or reduced power), and/or may determine it for each reference power and report it to a higher layer, and/or may determine it for each type/method (e.g., the number of repetitions (for a single DCI format) or an amount of resources) and whether a coverage enhancement mode of a specific DL channel (e.g., PDCCH) is activated and report it to a higher layer. For example, when determining an RLF, the UE may determine it based on a maximum or minimum or average value of measurement values for each reference power and report it to a higher layer, and/or may determine it based on a maximum or minimum or average value of measurement values for each type/method (e.g., the number of repetitions (for a single DCI format) or an amount of resources) and whether a coverage enhancement mode of a specific DL channel (e.g., PDCCH) is activated and report it to a higher layer.

Herein, for example, a reference power to be referenced for RLF determination may be determined based on a frequency or a ratio, etc., of each reference power to be used later based on a DL power allocation profile, etc., configured for the corresponding serving cell (e.g., a reference power with the highest usage ratio or whether a normal reference power is scheduled to be used during a certain time interval).

In an embodiment of the present disclosure, as reference power varies, the UE may apply a compensation value to a measurement result for an RRM purpose and/or an RLF purpose and/or a CSI purpose. For example, for a cell assuming a first reference power as a default value or a general value, if the UE receives an RS transmitted based on a second reference power, the UE may add and/or subtract a difference or a difference value between the first reference power and the second reference power for the measurement value based on the RS or a desired signal power term.

For example, the UE that camped-on based on an SSB may transmit response signaling for the received SSB.

For example, the form of the response signaling may be a (group-common) PRACH, and/or a resource for it may be pre-defined and/or may be indicated by a PBCH or an MIB. For example, a TX beam or a TX spatial setting for the response signalling may be associated with an RX beam or an RX spatial setting for an SSB corresponding to the response signalling.

For example, the base station may activate or deactivate SIB1 transmission and/or SIB1 repeated transmission and/or determine/adjust an amount thereof based on a response to the SSB, and/or the UE may perform an SIB1 reception operation and/or an SIB1 repetitive reception operation (PDCCH monitoring and/or PDSCH reception) after transmitting the response to the SSB reception.

For example, the UE that received a PDCCH for SIB1 and/or the UE that received a PDCCH with CRC scramble with all or a subset of RNTI (e.g., SI-RNTI) transmitted in Type0-CSS and/or CORESET 0 may transmit response signaling for the received PDCCH to the base station.

For example, the response signaling may be limitedly transmitted if the UE fails in decoding for a PDSCH scheduled by the PDCCH.

For example, the response signaling may be in the form of PUCCH and/or HARQ-ACK feedback. For example, the response signaling may be in the form of PRACH and/or MsgA. As a basis for this, it is because the UE may not know a suitable timing advance (TA) value before an initial access procedure.

For example, (for each cell) the base station may activate, deactivate, or adjust a frequency of all or a part of SSB transmission and/or SSB repeated transmission and/or SIB (1) transmission and/or SIB (1) repeated transmission, based on a presence or absence, a change, and/or an amount of an object and/or a (potential) UE detected by the base station (through sensing or the like). For example, if the UE receives or detects a signal associated with sensing from the base station, the UE may omit a reception operation for all or a part of SSB transmission and/or SSB repeated transmission and/or SIB (1) transmission and/or SIB (1) repeated transmission. For example, the omission operation may be activated or deactivated by the base station (through L1 and/or L2 and/or RRC signaling) for each cell, for each footprint, and/or for each beam group.

For example, the UE may report information on preferred and/or recommended DL traffic (e.g., DL traffic type, an amount of DL traffic) and/or information on a (peak or average) data rate to the base station.

For example, the base station may indicate/configure activation and/or deactivation information for a specific beam (group) to the UE (through RRC signaling and/or MAC CE and/or L1 signaling (e.g., group-common DCI)), and/or if a beam (group) associated with the UE is deactivated, the UE may omit PDCCH monitoring for a search space and/or CORESET where a TCI value corresponds to the corresponding beam (group). For example, the base station may omit all or a part of DL channel transmission for an interval where PDCCH monitoring is to be omitted by the UE.

For example, the beam (group) associated with the UE may be information on a footprint associated with the UE, and/or may be a beam (group) to which an SSB (beam) index linked to a PRACH resource used when the UE accesses a cell belongs. For example, the base station may configure a single or a plurality of groups for all SSB (beam) indices and indicate/configure them to the UE. For example, the beam group may correspond to/be associated with the same footprint.

In an embodiment of the present disclosure, PDCCH monitoring omission may be extended to omitting operations for CSI-RS reception and/or measurement, and/or S-SSB reception and/or measurement, and/or PDSCH reception scheduled by DCI, and/or SPS PDSCH reception.

Meanwhile, if it is a situation where total power of the satellite is limited, this may need to be considered for a feeder link, without being limited to a service link. For example, the satellite may transmit a UL channel/signal to a GW and/or a base station through a feeder link while simultaneously transmitting a DL channel/signal to the UE through a service link.

For example, even in a case of NR NTN limited to frequency division duplex (FDD) operation, similar to time division duplex (TDD), coordination of a DL interval and a UL interval may be required between footprints and/or between cells. For example, even in a case of an FDD carrier or operation, a (distinguished) DL reception interval region and/or UL transmission interval region may be configured and/or indicated to an NTN UE. For example, in the above situation, a DL reception operation and a UL transmission operation may not occur at the same time within the same UE and/or between different UEs.

For example, on the satellite side, UL transmission may be omitted for DL transmission, or UL TX power may be reduced. Conversely, on the satellite side, DL transmission may be omitted for UL transmission, or DL TX power may be reduced. For example, regardless of the capability of the UE and/or even for a UE without half-duplex restriction, the UE may perform a half-duplex operation.

In an embodiment of the present disclosure, the half-duplex operation may include the operations below.

For example, a half-duplex (HD)-UE may not expect to detect a DCI format scheduling reception for a set of symbols and a DCI format scheduling transmission in any symbol of the set of symbols.

For example, if PDCCH reception by a UE includes two PDCCH candidates, the end of a later PDCCH candidate among the two may be the end of the PDCCH reception.

For example, the HD-UE may not expect to detect a dedicated higher layer parameter configuring reception for a set of symbols and a DCI format scheduling transmission in any symbol of the set of symbols.

For example, the higher-layer configured reception of PDCCH, PDSCH, CSI-RS, and/or DL PRS in a set of symbols may be performed in a case where a DCI format indicating PUSCH, PUCCH, PRACH, SRS transmission for at least one symbol of the set of symbols is not detected.

For example, in a case of higher-layer configured PUCCH, PUSCH vs. DCI format-indicated CSI-RS, PDSCH, if there is the first symbol of UL transmission within T_{proc,2} from the last symbol of PDCCH reception for the DCI format, the UE may not cancel the UL transmission, and otherwise, the UE may cancel the UL transmission.

For example, in a case of higher-layer configured SRS vs. DCI format-indicated CSI-RS, PDSCH, SRS transmission within T_{proc,2} from the last symbol of PDCCH reception for the DCI format may not be canceled, and SRS transmission of the remaining residual symbols may be canceled.

For example, T_{proc,2} may be the PUSCH preparation time for UE processing capability 1 assuming d_{2,1}=1, and µ may correspond to the smallest SCS configuration among the SCS configuration of a PDCCH carrying a DCI format and the SCS configurations of SRS, PUCCH, and PUSCH.

For example, the simultaneous reception of a Type-0/0A/1/2-PDCCH CSS set configuration in a set of symbols and a dedicated higher layer parameter configuring transmission in the set of symbols may not be expected.

For example, in a case of higher-layer configured PUSCH, PUCCH vs. the presence of an SSB indicated within a DL BWP by NonCellDefiningSSB or in ServingCellConfigCommon or by ssb-PositionInBurst in SIB1, if a TX-RX switching time period is not guaranteed before the next earliest SSB, PUSCH, PUCCH transmission may be omitted, and/or if an RX-TX switching time period is not guaranteed after the previous latest SSB, PUSCH, PUCCH transmission may be omitted.

For example, in a case of higher-layer configured SRS vs. the presence of an SSB indicated within a DL BWP by NonCellDefiningSSB or in ServingCellConfigCommon or by ssb-PositionInBurst in SIB1, SRS of a symbol not being before a TX-RX switching time period from the next earliest SSB may not be transmitted, and/or SRS of a symbol not being after an RX-TX switching time period from the previous latest SSB may not be transmitted.

For example, in a case of PDCCH order-based PRACH, PUSCH, PUCCH vs. the presence of an SSB indicated within a DL BWP by NonCellDefiningSSB or in ServingCellConfigCommon or by ssb-PositionInBurst in SIB1, in a case where UL transmission overlaps with any symbol of the symbol duration of the SSB, the UL transmission may be omitted.

For example, in a case of SRS vs. the presence of an SSB indicated within a DL BWP by NonCellDefiningSSB or in ServingCellConfigCommon or by ssb-PositionInBurst in SIB1, SRS may not be transmitted in the symbol duration of the SSB.

For example, in a case of higher-layer triggered PRACH or MsgA PUSCH vs. reception of PDCCH, PDSCH, CSI-RS, DL PRS, vs. the presence of an SSB indicated within a DL BWP by NonCellDefiningSSB or in ServingCellConfigCommon or by ssb-PositionInBurst in SIB1, in a case where the symbol durations overlap, it may be UE implementation, and in a case where a TX-RX or an RX-TX switching period is not guaranteed, it may be UE implementation.

For example, it may be expected that DL signals are not FDMed with different beams within the same cell. For example, this may be extended to multiple cells. For example, the UE may omit other DL reception and/or UL transmission in a measurement gap.

For example, the UE may omit a measurement operation for all or a part of a time interval for an SSB measurement timing configuration (SMTC) configured by the base station. For example, the UE may be indicated with information on whether an SSB is transmitted in a time interval for a specific SMTC from the base station and/or may be indicated with whether to omit a measurement operation.

For example, the UE may not expect to receive a DL signal/channel in a second cell during a time interval of receiving a specific RS for the purpose of measurement or the like for a first cell. In this case, the accuracy of a measurement result for a neighbor cell can increase in a situation where the power on the satellite side is limited.

For example, the UE may not expect to receive a specific RS for the purpose of measurement or the like for a first cell during a time interval of receiving a DL signal/channel in a second cell. In this case, the throughput of a cell can be maximized in a situation where the power on the satellite side is limited.

For example, in a case where a time interval of receiving a specific RS (e.g., SSB) for the purpose of measurement or the like for a first cell and a time interval of receiving a DL signal/channel in a second cell overlap entirely or partially, the UE may omit reception of the DL signal/channel in the second cell.

For example, in a case where a time interval of receiving a specific RS (e.g., SSB) for the purpose of measurement or the like for a first cell and a time interval of receiving a DL signal/channel in a second cell overlap entirely or partially, the UE may omit a specific RS reception and/or measurement operation in the first cell.

For example, in a case where a time interval of receiving a specific RS (e.g., SSB) for the purpose of measurement or the like for a first cell and a time interval of receiving a DL signal/channel in a second cell overlap entirely or partially, the UE may perform a DL reception operation and/or a measurement operation by assuming the beam information associated with the specific RS for the first cell (e.g., TCI information, RX spatial setting, or the like).

For example, in a case where a time interval of receiving a specific RS (e.g., SSB) for the purpose of measurement or the like for a first cell and a time interval of receiving a DL signal/channel in a second cell overlap entirely or partially, the UE may perform a DL reception operation and/or a measurement operation by assuming the beam information associated with the DL signal/channel for the second cell (e.g., TCI information, RX spatial setting, or the like).

In an embodiment of the present disclosure, the first cell and the second cell may be limited to a case of corresponding to different footprints or satellite beams. For example, whether to activate/deactivate the operation may be different for each cell combination and/or for each beam combination, and/or may be independently configured/indicated.

In an embodiment of the present disclosure, a DL signal transmission resource for a first cell and a DL transmission resource for a second cell may include a case where they overlap in the time and/or frequency domain. In an embodiment of the present disclosure, a case where a DL signal transmission resource for a first cell overlaps with an active DL BWP for a second cell may be included.

In an embodiment of the present disclosure, whether the UE performs measurement for a first cell or performs DL reception for a second cell may be based on whether a scheduling restriction due to (RRM) measurement is usable and/or the DL signal/channel type received in the second cell. For example, in a case where the scheduling restriction is not usable, the UE may omit the measurement for the first cell.

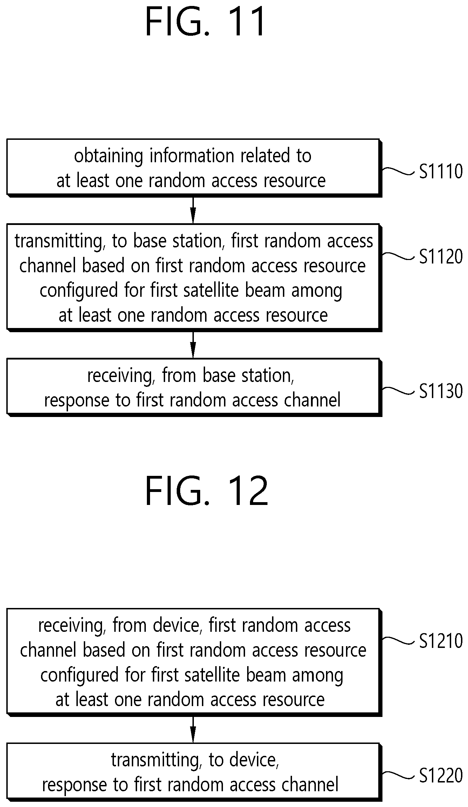

FIG. 11 shows a method for a device to perform wireless communication, based on an embodiment of the present disclosure. The embodiment of FIG. 11 may be combined with various embodiments of the present disclosure.

Referring to FIG. 11, in step S1110, the device may obtain information related to at least one random access resource. In step S1120, the device may transmit, to a base station, a first random access channel based on a first random access resource configured for a first satellite beam among the at least one random access resource. In step S1130, the device may receive, from the base station, a response to the first random access channel. For example, a random access resource may be configured for each satellite beam.

For example, whether the first satellite beam is busy may be determined based on the first random access resource used for transmission of the first random access channel.

For example, among the at least one random access resource, the first random access resource related to the first random access channel may be configured for the first satellite beam, and a second random access resource related to a second random access channel may be configured for a second satellite beam.

For example, configuration information for discontinuous transmission or reception may be configured for each satellite beam.

For example, a radio link failure for a channel in which a coverage enhancement mode is activated and a radio link failure for a channel in which the coverage enhancement mode is deactivated may be independently detected. For example, a detection criterion related to the radio link failure for the channel in which the coverage enhancement mode is activated and a detection criterion related to the radio link failure for the channel in which the coverage enhancement mode is deactivated may be independently configured. For example, a measurement related to the radio link failure for the channel in which the coverage enhancement mode is activated and a measurement related to the radio link failure for the channel in which the coverage enhancement mode is deactivated may be independently reported. For example, the channel may be a physical downlink control channel.

Additionally, for example, the device may receive, from the base station, activation information or deactivation information for the first satellite beam. For example, based on the deactivation information for the first satellite beam, control channel monitoring may be skipped on a resource related to the first satellite beam.

Additionally, for example, the device may receive a synchronization signal from the base station. Additionally, for example, the device may transmit, to the base station, a response to the synchronization signal through a third random access channel. For example, a third random access resource related to the third random access channel may be pre-configured, or may be configured through a broadcast channel or a master information block.

For example, transmission and reception with the base station may be performed through at least one of a satellite or a gateway.

The proposed method can be applied to devices based on various embodiments of the present disclosure. First, the processor 102 of the device 100 may obtain information related to at least one random access resource. In addition, the processor 102 of the device 100 may control the transceiver 106 to transmit, to a base station, a first random access channel based on a first random access resource configured for a first satellite beam among the at least one random access resource. In addition, the processor 102 of the device 100 may control the transceiver 106 to receive, from the base station, a response to the first random access channel. For example, a random access resource may be configured for each satellite beam.

Based on an embodiment of the present disclosure, a device may be provided. For example, the device may comprise: at least one transceiver; at least one processor; and at least one memory connected to the at least one processor and storing instructions. For example, the instructions, based on being executed by the at least one processor, may cause the device to perform operations comprising: obtaining information related to at least one random access resource; transmitting, to a base station, a first random access channel based on a first random access resource configured for a first satellite beam among the at least one random access resource; and receiving, from the base station, a response to the first random access channel. For example, a random access resource may be configured for each satellite beam.

Based on an embodiment of the present disclosure, a processing device adapted to control a device may be provided. For example, the processing device may comprise: at least one processor; and at least one memory connected to the at least one processor and storing instructions. For example, the instructions, based on being executed by the at least one processor, may cause the device to perform operations comprising: obtaining information related to at least one random access resource; transmitting, to a base station, a first random access channel based on a first random access resource configured for a first satellite beam among the at least one random access resource; and receiving, from the base station, a response to the first random access channel. For example, a random access resource may be configured for each satellite beam.

Based on an embodiment of the present disclosure, a non-transitory computer-readable storage medium storing instructions may be provided. For example, the instructions, when executed, may cause a device to perform operations comprising: obtaining information related to at least one random access resource; transmitting, to a base station, a first random access channel based on a first random access resource configured for a first satellite beam among the at least one random access resource; and receiving, from the base station, a response to the first random access channel. For example, a random access resource may be configured for each satellite beam.

FIG. 12 shows a method for a base station to perform wireless communication, based on an embodiment of the present disclosure. The embodiment of FIG. 12 may be combined with various embodiments of the present disclosure.

Referring to FIG. 12, in step S1210, the base station may receive, from a device, a first random access channel based on a first random access resource configured for a first satellite beam among at least one random access resource. In step S1220, the base station may transmit, to the device, a response to the first random access channel. For example, a random access resource may be configured for each satellite beam.

For example, whether the first satellite beam is busy may be determined based on the first random access resource used for reception of the first random access channel.

For example, among the at least one random access resource, the first random access resource related to the first random access channel may be configured for the first satellite beam, and a second random access resource related to a second random access channel may be configured for a second satellite beam.

For example, configuration information for discontinuous transmission or reception may be configured for each satellite beam.

For example, a radio link failure for a channel in which a coverage enhancement mode is activated and a radio link failure for a channel in which the coverage enhancement mode is deactivated may be independently detected. For example, a detection criterion related to the radio link failure for the channel in which the coverage enhancement mode is activated and a detection criterion related to the radio link failure for the channel in which the coverage enhancement mode is deactivated may be independently configured. For example, a measurement related to the radio link failure for the channel in which the coverage enhancement mode is activated and a measurement related to the radio link failure for the channel in which the coverage enhancement mode is deactivated may be independently reported. For example, the channel may be a physical downlink control channel.

Additionally, for example, the base station may transmit, to the device, activation information or deactivation information for the first satellite beam. For example, based on the deactivation information for the first satellite beam, control channel monitoring may be skipped on a resource related to the first satellite beam.

Additionally, for example, the base station may transmit a synchronization signal to the device. Additionally, for example, the base station may receive, from the device, a response to the synchronization signal through a third random access channel. For example, a third random access resource related to the third random access channel may be pre-configured, or may be configured through a broadcast channel or a master information block.

For example, transmission and reception with the device may be performed through at least one of a satellite or a gateway.

The proposed method can be applied to devices based on various embodiments of the present disclosure. First, the processor 202 of the base station 200 may control the transceiver 206 to receive, from a device, a first random access channel based on a first random access resource configured for a first satellite beam among at least one random access resource. In addition, the processor 202 of the base station 200 may control the transceiver 206 to transmit, to the device, a response to the first random access channel. For example, a random access resource may be configured for each satellite beam.

Based on an embodiment of the present disclosure, a base station may be provided. For example, the base station may comprise: at least one transceiver; at least one processor; and at least one memory connected to the at least one processor and storing instructions. For example, the instructions, based on being executed by the at least one processor, may cause the base station to perform operations comprising: receiving, from a device, a first random access channel based on a first random access resource configured for a first satellite beam among at least one random access resource; and transmitting, to the device, a response to the first random access channel. For example, a random access resource may be configured for each satellite beam.

Based on an embodiment of the present disclosure, a processing device adapted to control a base station may be provided. For example, the processing device may comprise: at least one processor; and at least one memory connected to the at least one processor and storing instructions. For example, the instructions, based on being executed by the at least one processor, may cause the base station to perform operations comprising: receiving, from a device, a first random access channel based on a first random access resource configured for a first satellite beam among at least one random access resource; and transmitting, to the device, a response to the first random access channel. For example, a random access resource may be configured for each satellite beam.

Based on an embodiment of the present disclosure, a non-transitory computer-readable storage medium storing instructions may be provided. For example, the instructions, when executed, may cause a base station to perform operations comprising: receiving, from a device, a first random access channel based on a first random access resource configured for a first satellite beam among at least one random access resource; and transmitting, to the device, a response to the first random access channel. For example, a random access resource may be configured for each satellite beam.

Based on various embodiments of the present disclosure, a pattern for discontinuous transmission and reception may be independently configured for each satellite beam, and/or resources for random access (e.g., PRACH resource, RAR resource, etc.) may be independently configured for each satellite beam. In this case, for example, the UE may perform the random access procedure using the resources for random access corresponding to its satellite beam, and/or the base station may efficiently determine a busy beam or an idle beam based on the resources for random access. In addition, an RLF may be declared and/or a measurement therefor may be reported based on whether a coverage enhancement mode is applied. Accordingly, a resource allocation procedure can be efficiently performed, and activation/deactivation for a satellite beam can be efficiently managed.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

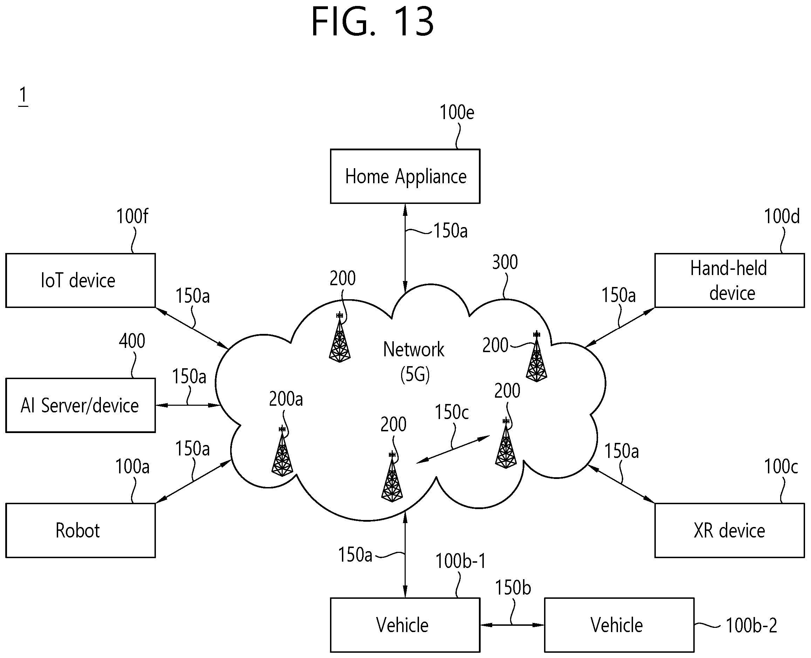

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

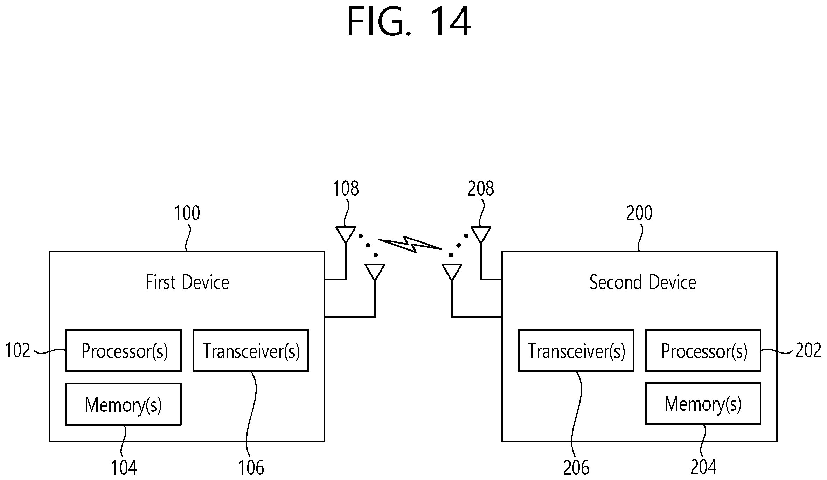

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

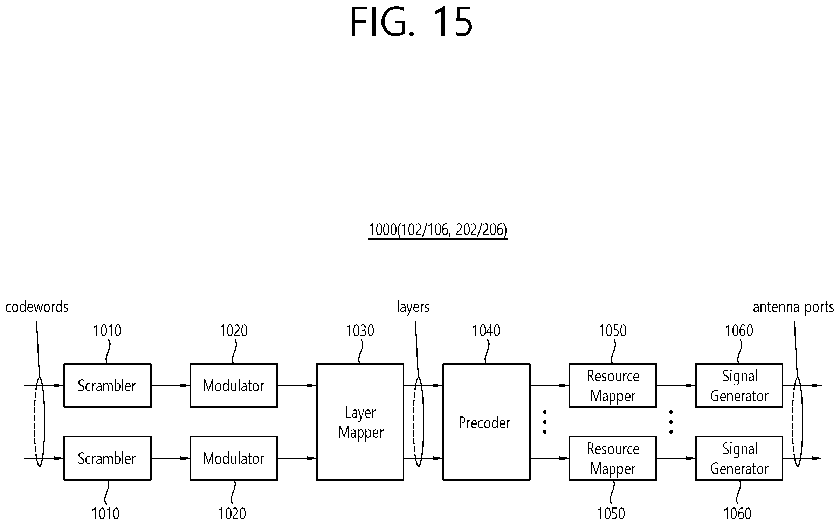

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

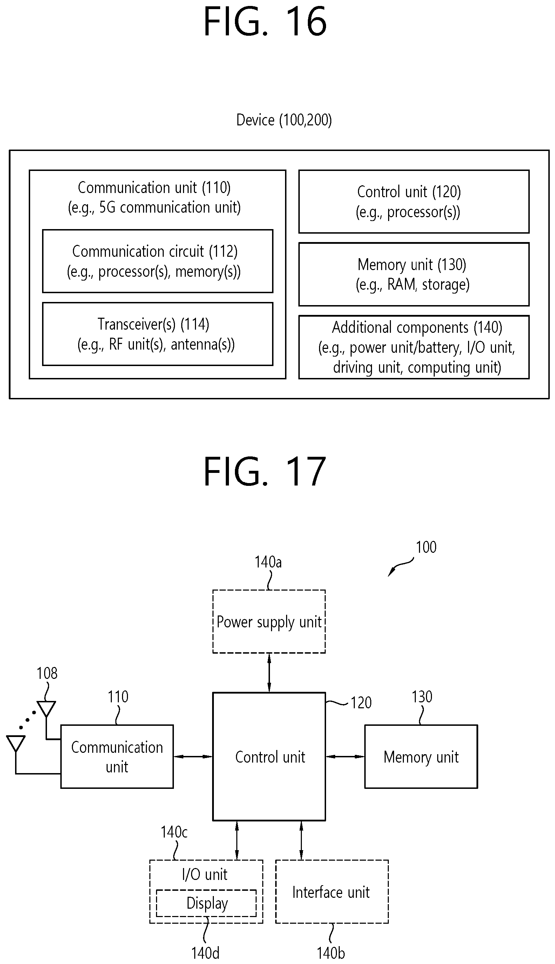

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

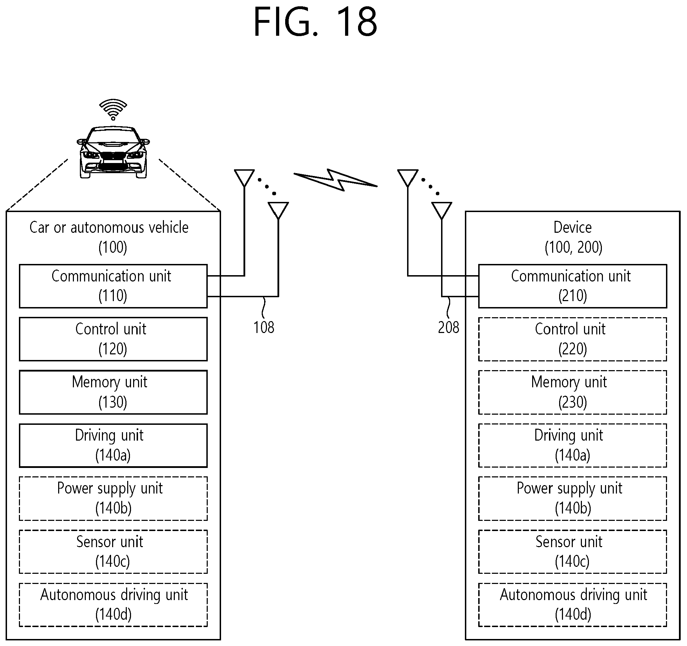

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method, comprising:
obtaining information related to at least one random access resource;
transmitting, to a base station, a first random access channel based on a first random access resource configured for a first satellite beam among the at least one random access resource; and
receiving, from the base station, a response to the first random access channel,
wherein a random access resource is configured for each satellite beam.

2. The method of claim 1, wherein whether the first satellite beam is busy is determined based on the first random access resource used for transmission of the first random access channel.

3. The method of claim 1, wherein, among the at least one random access resource, the first random access resource related to the first random access channel is configured for the first satellite beam, and a second random access resource related to a second random access channel is configured for a second satellite beam.

4. The method of claim 1, wherein configuration information for discontinuous transmission or reception is configured for each satellite beam.

5. The method of claim 1, wherein a radio link failure for a channel in which a coverage enhancement mode is activated and a radio link failure for a channel in which the coverage enhancement mode is deactivated are independently detected.

6. The method of claim 5, wherein a detection criterion related to the radio link failure for the channel in which the coverage enhancement mode is activated and a detection criterion related to the radio link failure for the channel in which the coverage enhancement mode is deactivated are independently configured.

7. The method of claim 5, wherein a measurement related to the radio link failure for the channel in which the coverage enhancement mode is activated and a measurement related to the radio link failure for the channel in which the coverage enhancement mode is deactivated are independently reported.

8. The method of claim 5, wherein the channel is a physical downlink control channel.

9. The method of claim 1, further comprising:
receiving, from the base station, activation information or deactivation information for the first satellite beam.

10. The method of claim 9, wherein, based on the deactivation information for the first satellite beam, control channel monitoring is skipped on a resource related to the first satellite beam.

11. The method of claim 1, further comprising:
receiving a synchronization signal from the base station; and
transmitting, to the base station, a response to the synchronization signal through a third random access channel.

12. The method of claim 11, wherein a third random access resource related to the third random access channel is pre-configured, or is configured through a broadcast channel or a master information block.

13. The method of claim 1, wherein transmission and reception with the base station are performed through at least one of a satellite or a gateway.

14. A device, comprising:
at least one transceiver;
at least one processor; and
at least one memory connected to the at least one processor and storing instructions that, based on being executed by the at least one processor, cause the device to perform operations comprising:
obtaining information related to at least one random access resource;
transmitting, to a base station, a first random access channel based on a first random access resource configured for a first satellite beam among the at least one random access resource; and
receiving, from the base station, a response to the first random access channel,
wherein a random access resource is configured for each satellite beam.

15. A processing device adapted to control a device, the processing device comprising:
at least one processor; and
at least one memory connected to the at least one processor and storing instructions that, based on being executed by the at least one processor, cause the device to perform operations comprising:
obtaining information related to at least one random access resource;
transmitting, to a base station, a first random access channel based on a first random access resource configured for a first satellite beam among the at least one random access resource; and
receiving, from the base station, a response to the first random access channel,
wherein a random access resource is configured for each satellite beam.

16. A non-transitory computer-readable storage medium storing instructions that, when executed, cause a device to perform operations comprising:
obtaining information related to at least one random access resource;
transmitting, to a base station, a first random access channel based on a first random access resource configured for a first satellite beam among the at least one random access resource; and
receiving, from the base station, a response to the first random access channel,
wherein a random access resource is configured for each satellite beam.

17. A method, comprising:
receiving, from a device, a first random access channel based on a first random access resource configured for a first satellite beam among at least one random access resource; and
transmitting, to the device, a response to the first random access channel,
wherein a random access resource is configured for each satellite beam.

18. A base station, comprising:
at least one transceiver;
at least one processor; and
at least one memory connected to the at least one processor and storing instructions that, based on being executed by the at least one processor, cause the base station to perform operations comprising:
receiving, from a device, a first random access channel based on a first random access resource configured for a first satellite beam among at least one random access resource; and
transmitting, to the device, a response to the first random access channel,
wherein a random access resource is configured for each satellite beam.

19. A processing device adapted to control a base station, the processing device comprising:
at least one processor; and
at least one memory connected to the at least one processor and storing instructions that, based on being executed by the at least one processor, cause the base station to perform operations comprising:
receiving, from a device, a first random access channel based on a first random access resource configured for a first satellite beam among at least one random access resource; and
transmitting, to the device, a response to the first random access channel,
wherein a random access resource is configured for each satellite beam.

20. A non-transitory computer-readable storage medium storing instructions that, when executed, cause a base station to perform operations comprising:
receiving, from a device, a first random access channel based on a first random access resource configured for a first satellite beam among at least one random access resource; and
transmitting, to the device, a response to the first random access channel,
wherein a random access resource is configured for each satellite beam.
